# EUROPÄISCHE PATENTSCHRIFT

(11) **EP 3 311 713 B1**
(45) Veröffentlichungstag und Bekanntmachung des Hinweises auf die Patenterteilung: **04.09.2019**
(21) Anmeldenummer: 17198158.2
(22) Anmeldetag: 24.10.2017
(51) Int. Cl.: A47J 31/46

(54) **GETRÄNKEMASCHINENVORRICHTUNG**
BEVERAGE MACHINES DEVICE
SYSTÈME DE MACHINE À BOISSONS

(30) Priorität: 24.10.2016 DE 102016120232
(43) Veröffentlichungstag der Anmeldung: 25.04.2018
(73) Patentinhaber: Sysko AG, 7000 Chur (CH)
(72) Erfinder: Helbling, Norbert, 8645 Jona (CH); Wißkirchen, Michael, 88410 Bad Wurzach (DE); Partzsch, Fred, 88099 Neunkirch (DE)
(74) Vertreter: Daub, Thomas

(56) Entgegenhaltungen:
- EP-A1- 2 428 143
- WO-A1-92/03081
- DE-C2- 1 250 985

## Beschreibung

### Stand der Technik

Die Erfindung betrifft eine Getränkemaschinenvorrichtung nach dem Oberbegriff des Anspruchs 1.

Es ist bereits eine Getränkemaschinenvorrichtung vorgeschlagen worden, welche einen Fluidkanal mit einem Hauptströmungskanal aufweist. Eine Ventileinheit weist ein Ventilelement mit einer Drucksteuerfläche auf und ist als eine Crema-Ventileinheit ausgebildet. Die Ventileinheit öffnet und/oder schließt in Abhängigkeit von einem auf die Drucksteuerfläche wirkenden Fluiddruck den Hauptströmungskanal durch Bewegung des Ventilelements. Die Drucksteuerfläche ist in einem Betriebszustand innerhalb des Hauptströmungskanals angeordnet.

EP 2 428 143 A1 offenbart eine Getränkemaschinenvorrichtung, worin die Kaffeeausgabe mittels eines über eine Druckleitung durch Druckwasser angesteuerten Ventils gegen einen Federdruck freigegeben, bzw. blockiert wird. WO 92/03081 A1 offenbart eine Espressomaschine, wobei ein Ventil vorgesehen ist, welches nur bei eingesetztem Siebträger die Zufuhr von Dampf/Wasser ermöglicht. DE 12 50 985 C2 offenbart eine Getränkemaschinenvorrichtung, wobei mittels Druckwasser ein Kolben beaufschlagt wird, welcher durch seine Abwärtsbewegung das Brühwasser durch das Kaffeepulver drückt.

Die Aufgabe der Erfindung besteht insbesondere darin, eine gattungsgemäße Vorrichtung mit verbesserten Eigenschaften hinsichtlich eines Kundenkomforts bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Getränkemaschinenvorrichtung, insbesondere von einer Kaffeemaschinenvorrichtung, mit zumindest einem Fluidkanal, welcher zumindest einen Hauptströmungskanal aufweist, und mit zumindest einer Ventileinheit, welche zumindest ein Ventilelement mit zumindest einer Drucksteuerfläche aufweist und welche dazu vorgesehen ist, zumindest in Abhängigkeit von einem auf die Drucksteuerfläche wirkenden Fluiddruck den Hauptströmungskanal durch Bewegung des Ventilelements zu öffnen und/oder zu schließen.

Es wird vorgeschlagen, dass die Drucksteuerfläche außerhalb des Hauptströmungskanals angeordnet ist, wodurch insbesondere ein hoher Kundenkomfort erreicht werden kann. Insbesondere kann ein wenigstens im Wesentlichen gleichmäßiger Druck in dem Hauptströmungskanal erzielt werden. Es kann insbesondere eine optimierte und/oder genaue Steuerung des Ventilelements ermöglicht werden.

Unter einer "Getränkemaschinenvorrichtung", insbesondere unter einer "Kaffeemaschinenvorrichtung", soll insbesondere zumindest ein Teil, insbesondere eine Unterbaugruppe, einer Getränkemaschine, insbesondere einer Kaffeemaschine und vorzugsweise eines Kaffeeautomaten, verstanden werden. Die Getränkemaschine könnte alternativ oder zusätzlich insbesondere eine Heißgetränkemaschine und/oder eine Milchschäumemaschine und/oder eine Suppenmaschine und/oder eine Teebrühmaschine sein. Insbesondere könnte die Getränkemaschinenvorrichtung alternativ oder zusätzlich insbesondere eine Heißgetränkemaschinenvorrichtung und/oder eine Milchschäumemaschinenvorrichtung und/oder eine Suppenmaschinenvorrichtung und/oder eine Teebrühmaschinenvorrichtung sein.

Unter einem "Fluidkanal" soll insbesondere eine Einheit verstanden werden, in welcher sich in zumindest einem Betriebszustand zumindest ein Fluid befindet und durch welche in wenigstens einem Betriebszustand zumindest ein Fluid vorzugsweise fließt. Der Fluidkanal definiert und/oder begrenzt insbesondere zumindest einen Weg, entlang welchem zumindest ein Fluid in wenigstens einem Betriebszustand fließt. Insbesondere bildet der Fluidkanal, insbesondere bei geschlossenem Ventilelement und insbesondere zusätzlich bei geschlossenem weiterem Ventilelement, zumindest einen geschlossenen Kanalraum für zumindest ein Fluid aus. Das Fluid könnte beispielsweise flüssig und/oder gasförmig und/oder ein Gemisch aus Flüssigkeit und/oder Gas und/oder Feststoff sein.

Unter einem "Hauptströmungskanal" soll insbesondere ein bevorzugter und/oder vorgegebener und/oder erwünschter Weg verstanden werden, entlang welchem in wenigstens einem Betriebszustand zumindest ein Fluid wenigstens zu einem Großteil fließt. Der Hauptströmungskanal soll insbesondere von einem Bereich des Fluidkanals verschieden ausgebildet sein, in welchem das Fluid in dem Betriebszustand zumindest zu einem Großteil steht. Unter "wenigstens zu einem Großteil" soll insbesondere zu einem Anteil von mindestens 70 %, insbesondere zu mindestens 80 %, vorteilhaft zu mindestens 90 % und vorzugsweise zu mindestens 95 % verstanden werden.

Die Getränkemaschinenvorrichtung weist insbesondere zumindest eine Getränkepumpe auf, welche insbesondere an den Fluidkanal, insbesondere an zumindest einen Haupteingang des Fluidkanals, gekoppelt ist und welche insbesondere in wenigstens einem Betriebszustand zumindest ein Fluid in den Fluidkanal und vorteilhaft in den Hauptströmungskanal einbringt. Die Getränkepumpe gibt insbesondere zumindest eine Hauptströmungsrichtung vor, entlang welcher zumindest ein Fluid in wenigstens einem Betriebszustand durch den Hauptströmungskanal fließt.

Unter einer "Drucksteuerfläche" des Ventilelements soll insbesondere zumindest ein Oberflächenbereich des Ventilelements verstanden werden, auf welchen in wenigstens einem Betriebszustand zumindest ein Fluiddruck einwirkt und welche insbesondere in Abhängigkeit von einem Betrag des wirkenden Fluiddrucks zumindest einen Beitrag zu einer Veränderung eines Zustands des Ventilelements liefert, wobei eine Veränderung des Zustands des Ventilelements insbesondere von einer Höhe und/oder einem Betrag des Beitrags abhängig ist. Der Zustand des Ventilelements könnte beispielsweise ein Öffnungszustand und/oder ein Schließzustand sein.

Unter der Wendung, dass die Ventileinheit dazu vorgesehen ist, "zumindest" in Abhängigkeit von einem auf die Drucksteuerfläche wirkenden Fluiddruck den Hauptströmungskanal durch Bewegung des Ventilelements zu öffnen und/oder zu schließen, soll insbesondere verstanden werden, dass die Ventileinheit in wenigstens einem Betriebszustand den Hauptströmungskanal durch Bewegung des Ventilelements ausschließlich in Abhängigkeit von einem auf die Drucksteuerfläche wirkenden Fluiddruck oder in Abhängigkeit von einem auf die Drucksteuerfläche wirkenden Fluiddruck und in Abhängigkeit von zumindest einer weiteren Variablen öffnet und/oder schließt. Die weitere Variable könnte beispielsweise zumindest ein auf zumindest eine weitere Drucksteuerfläche, insbesondere auf zumindest eine zweite Drucksteuerfläche und/oder auf zumindest eine dritte Drucksteuerfläche, wirkender Fluiddruck und/oder zumindest eine insbesondere mittels zumindest eines Federelements erzeugte Kraft sein.

Unter der Wendung, dass die Drucksteuerfläche "außerhalb" des Hauptströmungskanals angeordnet ist, soll insbesondere verstanden werden, dass die Drucksteuerfläche und der Hauptströmungskanal zueinander beabstandet angeordnet sind. Insbesondere ist zumindest ein weiteres Objekt zwischen dem Hauptströmungskanal und der Drucksteuerfläche angeordnet. Das weitere Objekt könnte beispielsweise zumindest eine Fluidkammer und/oder zumindest eine Wandung, insbesondere eine den Hauptströmungskanal begrenzende Wandung, und/oder zumindest ein Teilbereich des Ventilelements sein. Ein Kontakt zwischen einem durch den Hauptströmungskanal fließenden Fluid und der Drucksteuerfläche ist insbesondere in jedem Betriebszustand, in welchem sich das Fluid innerhalb des Hauptströmungskanals befindet, unterbunden.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Ferner wird vorgeschlagen, dass das Ventilelement zumindest eine zweite Drucksteuerfläche aufweist, welche in wenigstens einem Betriebszustand, in welchem sich das Ventilelement insbesondere in zumindest einer Schließstellung befindet, innerhalb des Hauptströmungskanals angeordnet ist. Unter der Wendung, dass die zweite Drucksteuerfläche in wenigstens einem Betriebszustand "innerhalb" des Hauptströmungskanals angeordnet ist, soll insbesondere verstanden werden, dass die zweite Drucksteuerfläche in dem Betriebszustand in Kontakt mit zumindest einem durch den Hauptströmungskanal fließenden Fluid angeordnet ist. Eine Größe der zweiten Drucksteuerfläche könnte beispielsweise bewusst klein gehalten werden, da insbesondere eine Wirkung der zweiten Drucksteuerfläche in zumindest einer Öffnungsstellung des Ventilelements gering sein oder komplett entfallen könnte. Dadurch kann insbesondere eine direkte Steuerung des Ventilelements durch das in dem Hauptströmungskanal befindliche Fluid erreicht werden, wodurch insbesondere auf Druckschwankungen innerhalb des Hauptströmungskanals direkt reagiert werden kann.

Die Drucksteuerfläche und die zweite Drucksteuerfläche könnten beispielsweise fluidtechnisch entgegengerichtet sein. Vorzugsweise sind die Drucksteuerfläche und die zweite Drucksteuerfläche fluidtechnisch gleichgerichtet. Unter der Wendung, dass die Drucksteuerfläche und die zweite Drucksteuerfläche "fluidtechnisch gleichgerichtet" sind, soll insbesondere verstanden werden, dass zumindest eine auf die Drucksteuerfläche wirkende Kraft und zumindest eine auf die zweite Drucksteuerfläche wirkende Kraft in dieselbe Richtung wirken und/oder ausgerichtet sind. Dadurch kann insbesondere eine hohe Zuverlässigkeit durch zwei in dieselbe Richtung wirkende und/oder ausgerichtete Drucksteuerflächen erzielt werden.

Ferner wird vorgeschlagen, dass das Ventilelement zumindest eine dritte Drucksteuerfläche aufweist, welche außerhalb des Hauptströmungskanals angeordnet und der Drucksteuerfläche fluidtechnisch entgegengerichtet ist. Unter der Wendung, dass die dritte Drucksteuerfläche der Drucksteuerfläche "fluidtechnisch entgegengerichtet" ist, soll insbesondere verstanden werden, dass zumindest eine auf die dritte Drucksteuerfläche wirkende Kraft und zumindest eine auf die Drucksteuerfläche wirkende Kraft in einander entgegensetzte Richtungen wirken und/oder ausgerichtet sind. Dadurch kann insbesondere eine weitere Einflussgröße zu einer Bewegung des Ventilelements beitragen und/oder berücksichtigt werden, wodurch eine optimierte Steuerung des Ventilelements ermöglicht werden kann.

Ferner wird vorgeschlagen, dass die Ventileinheit zumindest ein Federelement aufweist, welches in wenigstens einem Betriebszustand einer durch ein Fluid an der Drucksteuerfläche erzeugten Kraft und insbesondere zusätzlich einer durch ein Fluid an der zweiten Drucksteuerfläche erzeugten Kraft wenigstens teilweise entgegen wirkt. Unter der Wendung, dass das Federelement in wenigstens einem Betriebszustand einer durch ein Fluid an der Drucksteuerfläche erzeugten Kraft "wenigstens teilweise" entgegen wirkt, soll insbesondere verstanden werden, dass das Federelement in dem Betriebszustand der durch ein Fluid an der Drucksteuerfläche erzeugten Kraft alleine oder gemeinsam mit zumindest einer weiteren Kraft, insbesondere mit zumindest einer durch ein Fluid an der dritten Drucksteuerfläche angreifenden Kraft, entgegen wirkt. Insbesondere wirkt das Federelement in wenigstens einem Betriebszustand einer Kraft entgegen, welche sich aus einer durch ein Fluid an der Drucksteuerfläche erzeugten Kraft und insbesondere einer durch ein Fluid an der zweiten Drucksteuerfläche erzeugten Kraft und insbesondere abzüglich einer durch ein Fluid an der dritten Drucksteuerfläche erzeugten Kraft zusammensetzt. Unter einem "Federelement" soll insbesondere ein makroskopisches Element verstanden werden, das zumindest eine Erstreckung aufweist, die in einem normalen Betriebszustand um zumindest 5%, insbesondere um wenigstens 15%, vorzugsweise um mindestens 30% und besonders vorteilhaft um zumindest 50% elastisch veränderbar ist, und das insbesondere eine von einer Veränderung der Erstreckung abhängige und vorzugsweise zu der Veränderung proportionale Gegenkraft erzeugt, die der Veränderung entgegen wirkt. Unter einer "Erstreckung" eines Elements soll insbesondere ein maximaler Abstand zweier Punkte einer senkrechten Projektion des Elements auf eine Ebene verstanden werden. Unter einem "makroskopischen Element" soll insbesondere ein Element mit einer Erstreckung von zumindest 1 mm, insbesondere von wenigstens 5 mm und vorzugsweise von mindestens 10 mm verstanden werden. Das Federelement ist insbesondere als eine Druckfeder ausgebildet und greift insbesondere an dem Ventilelement an. Dadurch kann insbesondere ein optimaler Druck, insbesondere ein Minimaldruck, in dem Hauptströmungskanal erzeugt werden, wodurch insbesondere eine optimierte Getränkeausgabe erreicht werden kann.

Die Ventileinheit könnte beispielsweise als ein Maximaldruckregler ausgebildet sein. Vorzugsweise ist die Ventileinheit als ein Minimaldruckregler ausgebildet. Dadurch kann insbesondere ein wenigstens im Wesentlichen konstanter Volumenstrom durch den Hauptströmungskanal ermöglicht werden, wodurch insbesondere eine vorteilhafte Getränkeausgabe erzielt werden kann.

Beispielsweise könnte die Getränkemaschinenvorrichtung insbesondere ausschließlich die Ventileinheit aufweisen. Vorzugsweise weist die Getränkemaschinenvorrichtung zumindest eine weitere Ventileinheit auf, welche zumindest ein weiteres Ventilelement mit zumindest einer weiteren Drucksteuerfläche aufweist, die außerhalb des Hauptströmungskanals angeordnet ist. Dadurch kann insbesondere ein besonders hoher Kundenkomfort erreicht werden.

Ferner wird vorgeschlagen, dass die weitere Ventileinheit als ein Maximaldruckregler ausgebildet ist. Die weitere Ventileinheit ist insbesondere dazu vorgesehen, im Fall eines Druckanstiegs in zumindest einem Abschnitt des Hauptströmungskanals, welcher sich insbesondere in Hauptströmungsrichtung vor zumindest einer Brüheinheit befindet, den Hauptströmungskanal zu schließen und insbesondere einen Fluidstrom von der Pumpe in den Abschnitt des Hauptströmungskanals zu unterbinden. Dadurch kann insbesondere ein Maximaldruck begrenzt und/oder ein Überschreiten eines durch die Ventileinheit eingestellten Brühdrucks vermieden werden. Ein Herauslösen von Bitterstoffen kann insbesondere vermieden werden. Insbesondere kann ein Verstopfen zumindest einer Brüheinheit vermieden werden.

Zudem wird vorgeschlagen, dass der Fluidkanal zumindest eine Druckleitung aufweist, welche von dem Hauptströmungskanal insbesondere wenigstens im Wesentlichen rechtwinklig abzweigt und zu der Drucksteuerfläche und insbesondere zusätzlich zu der dritten Drucksteuerfläche führt. Ein sich in dem Hauptströmungskanal befindliches Fluid ist insbesondere wenigstens zu einem Großteil gasförmig. Der Hauptströmungskanal und die Druckleitung sind insbesondere fluidtechnisch miteinander verbunden. Dadurch kann die Drucksteuerfläche insbesondere mit einem in zumindest einem Abschnitt des Hauptströmungskanals wirkenden Druck beaufschlagt werden, wodurch insbesondere eine optimierte Steuerung des Ventilelements ermöglicht werden kann.

Weiterhin wird vorgeschlagen, dass die Getränkemaschinenvorrichtung zumindest eine Brüheinheit aufweist, welche innerhalb des Hauptströmungskanals angeordnet ist. Insbesondere weist die Brüheinheit zumindest eine Aufnahmeeinheit auf, welche zu einer Aufnahme zumindest eines Geschmacksstoffs vorgesehen ist. Der Geschmacksstoff könnte insbesondere zumindest ein Feststoff, welcher beispielsweise pulverförmig und/oder granulatförmig ausgebildet sein könnte, und/oder eine Kapsel sein. In wenigstens einem Betriebszustand fließt insbesondere ein in dem Hauptströmungskanal befindliches Fluid durch die Brüheinheit hindurch und nimmt insbesondere zumindest einen Teil des Geschmacksstoffs, welcher sich insbesondere in dem Fluid wenigstens teilweise löst, auf. Dadurch kann insbesondere eine Ausgabe von Heißgetränken ermöglicht werden, wodurch insbesondere ein hoher Komfort für einen Kunden erzielt werden kann.

Ferner wird vorgeschlagen, dass die Druckleitung die Brüheinheit überbrückt. Insbesondere ist die Druckleitung als ein Bypass für die Brüheinheit ausgebildet. Dadurch können insbesondere vorteilhafte Druckverhältnisse in dem Fluidkanal erreicht werden.

Zudem wird vorgeschlagen, dass die Brüheinheit die Ventileinheit und die weitere Ventileinheit insbesondere bezüglich zumindest einer Hauptströmungsrichtung voneinander trennt. Insbesondere sind die Ventileinheit und die weitere Ventileinheit insbesondere bezüglich zumindest einer Hauptströmungsrichtung auf verschiedenen, einander gegenüberliegenden Seiten der Brüheinheit angeordnet. Dadurch kann insbesondere ein hoher Kundenkomfort und/oder eine hohe Kundenzufriedenheit erzielt werden.

Beispielsweise könnte ein Öffnungswiderstand des Ventilelements fest vorgegeben und insbesondere bei einer Montage festgelegt sein. Vorteilhaft ist ein Öffnungswiderstand des Ventilelements veränderbar. Vorzugsweise weist die Ventileinheit zumindest eine Einstelleinheit auf, mittels welcher ein Öffnungswiderstand des Ventilelements insbesondere in wenigstens einem Betriebszustand, in welchem sich insbesondere zumindest ein Fluid in dem Fluidkanal, insbesondere in dem Hauptströmungskanal und in der Druckleitung, befindet, einstellbar ist. Unter einem "Öffnungswiderstand" des Ventilelements soll insbesondere ein Widerstand verstanden werden, welcher überwunden werden muss, um das Ventilelement in wenigstens einem drucklosen Zustand, in welchem insbesondere der Fluidkanal, insbesondere der Hauptströmungskanal und die Druckleitung, frei von Fluid sind, zu bewegen, insbesondere zu öffnen. Unter einer "Einstelleinheit" soll insbesondere eine Einheit verstanden werden, welche dazu vorgesehen ist, in wenigstens einem Betriebszustand zumindest eine Vorspannungskraft des Federelements, insbesondere eine von dem Federelement in wenigstens einem drucklosen Zustand auf das Ventilelement erzeugte Kraft, zu verändern und/oder einzustellen. Beispielsweise könnte die Einstelleinheit insbesondere als eine Gewindeeinheit ausgebildet sein und insbesondere zumindest ein Gewinde aufweisen, mittels welchem der Öffnungswiderstand des Ventilelements einstellbar sein könnte. Die weitere Ventileinheit weist insbesondere zumindest eine weitere Einstelleinheit auf, mittels welcher ein Öffnungswiderstand des weiteren Ventilelements einstellbar ist. Insbesondere ist die weitere Einstelleinheit äquivalent zu der Einstelleinheit der Ventileinheit ausgebildet. Dadurch kann insbesondere eine hohe Flexibilität erreicht werden.

Die Einstelleinheit könnte beispielsweise manuell, insbesondere durch einen Kunden, betätigbar sein, wodurch insbesondere ein Kunde einen gewünschten Druck in dem Hauptströmungskanal selbst einstellen könnte, und zwar insbesondere in Abhängigkeit von einem zuzubereitenden Getränk. Vorzugsweise weist die Getränkemaschinenvorrichtung zumindest eine Steuereinheit auf, welche dazu vorgesehen ist, in wenigstens einem Betriebszustand den Öffnungswiderstand des Ventilelements durch Betätigung der Einstelleinheit zu verändern. Die Steuereinheit könnte beispielsweise zumindest eine Speichereinheit aufweisen, in welcher zumindest ein automatisches Getränkezubereitungsprogramm gespeichert sein könnte. Die Steuereinheit könnte beispielsweise dazu vorgesehen sein, bei Durchführung zumindest eines automatischen Getränkezubereitungsprogramms den Öffnungswiderstand des Ventilelements und damit verbunden insbesondere einen Druck in dem Hauptströmungskanal durch Betätigung der Einstelleinheit zu verändern. Dadurch kann insbesondere ein hoher Kundenkomfort erreicht werden. Insbesondere kann auf einen Drucksensor in dem Hauptströmungskanal verzichtet und damit ein hoher technischer Aufwand vermieden werden.

Ein besonders hoher Kundenkomfort kann insbesondere erreicht werden durch eine Getränkemaschine, insbesondere durch eine Kaffeemaschine und vorzugsweise durch einen Kaffeeautomaten, mit zumindest einer erfindungsgemäßen Getränkemaschinenvorrichtung, insbesondere mit zumindest einer erfindungsgemäßen Kaffeemaschinenvorrichtung.

Ein Kundenkomfort kann insbesondere weiter gesteigert werden durch ein Verfahren zu einem Betrieb einer erfindungsgemäßen Getränkemaschinenvorrichtung, insbesondere einer erfindungsgemäßen Kaffeemaschinenvorrichtung, wobei in wenigstens einem Betriebszustand ein Fluiddruck innerhalb zumindest eines Hauptströmungskanals insbesondere mittels zumindest einer Ventileinheit, vorteilhaft mittels der Ventileinheit und/oder mittels der weiteren Ventileinheit, auf einen wenigstens im Wesentlichen konstanten Wert eingeregelt wird. Darunter, dass in wenigstens einem Betriebszustand ein Fluiddruck innerhalb zumindest eines Hauptströmungskanals auf einen "wenigstens im Wesentlichen konstanten Wert" eingeregelt wird, soll insbesondere verstanden werden, dass ein Betrag des Fluiddrucks in dem Betriebszustand um maximal 25 %, insbesondere um maximal 15 %, vorteilhaft um maximal 10 % und vorzugsweise um maximal 5 % schwankt und/oder von einem durchschnittlichen Fluiddruck abweicht. Beispielsweise könnte bei einem Fluiddruck von wenigstens im Wesentlichen 8 bar eine Schwankung des Fluiddrucks insbesondere maximal 2 bar betragen.

Die erfindungsgemäße Getränkemaschinenvorrichtung soll hierbei nicht auf die oben beschriebene Anwendung und Ausführungsform beschränkt sein. Insbesondere kann die erfindungsgemäße Getränkemaschinenvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Getränkemaschine mit einer Getränkemaschinenvorrichtung in einer schematischen Darstellung,
- Fig. 2: einen Fluidkanal, eine Brüheinheit, eine Ventileinheit und eine weitere Ventileinheit der Getränkemaschinenvorrichtung in einer schematischen Darstellung, und
- Fig. 3: die Ventileinheit in einer vergrößerten schematischen Darstellung.,
- Fig. 4: ein Ablaufdiagramm eines Verfahrens zum Betrieb der Getränkemaschinenvorrichtung in einer schematischen Darstellung und
- Fig. 5: einen Fluidkanal, eine Brüheinheit, eine Ventileinheit und eine weitere Ventileinheit einer alternativen Getränkemaschinenvorrichtung in einer schematischen Darstellung.

### Beschreibung der Ausführungsbeispiele

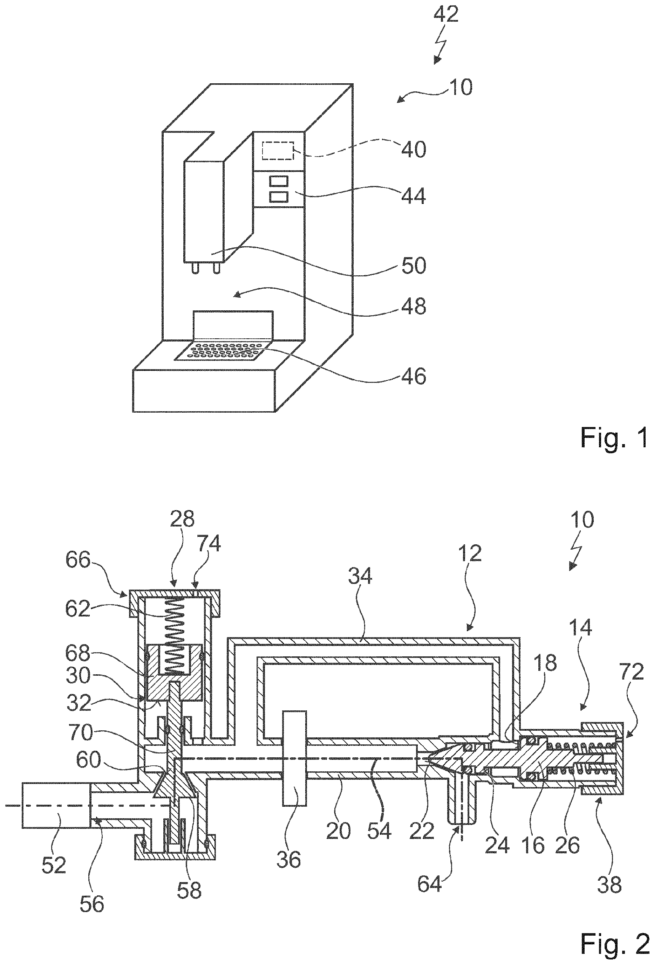

Figur 1 zeigt eine Getränkemaschine 42, die als eine Kaffeemaschine ausgebildet ist. Die Getränkemaschine 42 könnte beispielsweise dazu vorgesehen sein, Getränke portioniert zuzubereiten und insbesondere Getränkeportionen auszugeben. Insbesondere könnte die Getränkemaschine 42 als ein Kaffeevollautomat ausgebildet sein.

Die Getränkemaschine 42 weist zumindest einen Vorratsbehälter für Wasser auf (nicht dargestellt). Im vorliegenden Ausführungsbeispiel weist die Getränkemaschine 42 einen Vorratsbehälter für Wasser auf. Die Getränkemaschine 42 weist zumindest einen Vorratsbehälter für Kaffee auf. Im vorliegenden Ausführungsbeispiel weist die Getränkemaschine 42 einen Vorratsbehälter für Kaffee auf (nicht dargestellt).

Die Getränkemaschine 42 weist einen Abstellrost 46 auf, auf welchem ein Bediener ein Gefäß abstellen kann. Die Getränkemaschine 42 weist eine Gefäßaufnahme 48 auf, welche in einer Einbaulage oberhalb des Abstellrosts 46 angeordnet ist. Die Gefäßaufnahme 48 ist zu einem Einstellen eines Gefäßes vorgesehen.

Die Getränkemaschine 42 weist eine Getränkeausgabeeinheit 50 auf, welche zu einer Ausgabe zumindest eines Getränks, insbesondere zumindest einer Getränkeportion und vorteilhaft in ein in der Gefäßaufnahme 48 angeordnetes Gefäß, vorgesehen ist.

Die Getränkemaschine 42 weist eine Getränkemaschinenvorrichtung 10 auf. Die Getränkemaschinenvorrichtung 10 ist als eine Kaffeemaschinenvorrichtung ausgebildet. Die Getränkemaschinenvorrichtung 10 weist eine Bedienerschnittstelle 44 auf, welche zu einer Bedienereingabe zumindest eines Betriebsparameters vorgesehen ist.

Die Getränkemaschinenvorrichtung 10 weist eine Getränkepumpe 52 auf (vgl. Figur 2). Die Getränkepumpe 52 ist zur Förderung eines Fluids, insbesondere einer Flüssigkeit, wie beispielsweise Wasser, vorgesehen. In einem Betriebszustand bringt die Getränkepumpe 52 das Fluid in einen Hauptströmungskanal 20 eines Fluidkanals 12 ein.

Die Getränkemaschinenvorrichtung 10 weist den Fluidkanal 12 auf. Der Fluidkanal 12 weist den Hauptströmungskanal 20 auf. Der Fluidkanal 12 weist einen Haupteingang 56 auf. Die Getränkepumpe 52 ist fluidtechnisch an den Haupteingang 56 angebunden (in Figur 2 schematisch dargestellt). Der Haupteingang 56 des Fluidkanals 12 ist als ein Eingang des Hauptströmungskanals 20 ausgebildet.

Die Getränkepumpe 52 bringt in einem Betriebszustand das Fluid über den Haupteingang 56 in den Hauptströmungskanal 20 ein. In dem Betriebszustand fördert die Getränkepumpe 52 das Fluid in einer Hauptströmungsrichtung 54. Das in dem Hauptströmungskanal 20 befindliche Fluid ist eine Flüssigkeit.

Die Getränkemaschinenvorrichtung 10 weist eine Ventileinheit 14 auf. Die Ventileinheit 14 weist ein Ventilelement 16 auf, das eine Drucksteuerfläche 18 aufweist. In dem Betriebszustand öffnet oder schließt die Ventileinheit 14 in Abhängigkeit von einem auf die Drucksteuerfläche 18 wirkenden Fluiddruck den Hauptströmungskanal 20 durch Bewegung des Ventilelements 16.

Im vorliegenden Ausführungsbeispiel ist der auf die Drucksteuerfläche 18 wirkende Fluiddruck ein Gasdruck. Die Drucksteuerfläche 18 ist außerhalb des Hauptströmungskanals 20 angeordnet. In jedem Betriebszustand ist die Drucksteuerfläche 18 beabstandet zu dem in dem Hauptströmungskanal 20 befindlichen Fluid angeordnet.

Das Ventilelement 16 weist eine zweite Drucksteuerfläche 22 auf. In dem Betriebszustand ist die zweite Drucksteuerfläche 22 innerhalb des Hauptströmungskanals 20 angeordnet. Das Ventilelement 16 befindet sich in dem Betriebszustand in einem Schließzustand. Die Drucksteuerfläche 18 und die zweite Drucksteuerfläche 22 sind fluidtechnisch gleichgerichtet.

Das Ventilelement 16 weist eine dritte Drucksteuerfläche 24 auf. Die dritte Drucksteuerfläche 24 ist der Drucksteuerfläche 18 fluidtechnisch entgegengerichtet. In jedem Betriebszustand ist die dritte Drucksteuerfläche 24 beabstandet zu dem in dem Hauptströmungskanal 20 befindlichen Fluid angeordnet. Die dritte Drucksteuerfläche 24 ist außerhalb des Hauptströmungskanals 20 angeordnet.

Die Ventileinheit 14 weist ein Federelement 26 auf. Das Federelement 26 ist als eine Druckfeder ausgebildet. In dem Betriebszustand ist das Federelement 26 in Kontakt mit dem Ventilelement 16 angeordnet. Das Federelement 26 beaufschlagt das Ventilelement 16 in dem Betriebszustand mit einer Federkraft. In dem Betriebszustand wirkt das Federelement 26 einer durch das Fluid an der Drucksteuerfläche 18 erzeugten Kraft teilweise entgegen.

Im vorliegenden Ausführungsbeispiel ist die Ventileinheit 16 als ein Minimaldruckregler ausgebildet. Die Getränkemaschinenvorrichtung 10 weist eine weitere Ventileinheit 28 auf. Die weitere Ventileinheit 28 ist als ein Maximaldruckregler ausgebildet.

Die weitere Ventileinheit 28 weist ein weiteres Ventilelement 30 auf. Das weitere Ventilelement 30 ist im vorliegenden Ausführungsbeispiel zweiteilig ausgebildet. Das weitere Ventilelement 30 weist einen weiteren ersten Ventilelementteilbereich 68 und einen weiteren zweiten Ventilelementteilbereich 70 auf. Der weitere erste Ventilelementteilbereich 68 und der weitere zweite Ventilelementteilbereich 70 sind in einem montierten Zustand miteinander verbunden. Alternativ könnte das weitere Ventilelement 30 einstückig ausgebildet sein.

Das weitere Ventilelement 30 weist eine weitere Drucksteuerfläche 32 aufweist. In dem Betriebszustand öffnet oder schließt die weitere Ventileinheit 28 in Abhängigkeit von einem auf die weitere Drucksteuerfläche 32 wirkenden Fluiddruck den Hauptströmungskanal 20 durch Bewegung des weiteren Ventilelements 30.

Im vorliegenden Ausführungsbeispiel ist der auf die weitere Drucksteuerfläche 32 wirkende Fluiddruck ein Flüssigkeitsdruck. Die weitere Drucksteuerfläche 32 ist außerhalb des Hauptströmungskanals 20 angeordnet. In jedem Betriebszustand ist die weitere Drucksteuerfläche 32 beabstandet zu dem in dem Hauptströmungskanal 20 befindlichen Fluid angeordnet.

Das weitere Ventilelement 30 weist eine weitere zweite Drucksteuerfläche 58 auf. In jedem Betriebszustand ist die weitere zweite Drucksteuerfläche 58 innerhalb des Hauptströmungskanals 20 angeordnet. Die weitere Drucksteuerfläche 32 und die weitere zweite Drucksteuerfläche 58 sind fluidtechnisch gleichgerichtet.

Das weitere Ventilelement 30 weist eine weitere dritte Drucksteuerfläche 60 auf. Die weitere dritte Drucksteuerfläche 60 ist der weiteren Drucksteuerfläche 32 fluidtechnisch entgegengerichtet. In jedem Betriebszustand ist die weitere dritte Drucksteuerfläche 60 innerhalb des Hauptströmungskanals 20 angeordnet.

Die weitere Ventileinheit 28 weist ein weiteres Federelement 62 auf. Das weitere Federelement 62 ist als eine Druckfeder ausgebildet. In dem Betriebszustand ist das weitere Federelement 62 in Kontakt mit dem weiteren Ventilelement 30 angeordnet. Das weitere Federelement 62 beaufschlagt das weitere Ventilelement 30 in dem Betriebszustand mit einer Federkraft. In dem Betriebszustand wirkt das weitere Federelement 62 einer durch das Fluid an der weiteren Drucksteuerfläche 32 erzeugten Kraft teilweise entgegen.

Die weitere Ventileinheit 28 ist in einem Bereich des Haupteingangs 56 angeordnet. Der Hauptströmungskanal 20 führt von dem Haupteingang 56 zu einem Hauptausgang 64 des Fluidkanals 12. Der Fluidkanal 12 weist den Hauptausgang 64 auf. Der Hauptausgang 64 und die Getränkeausgabeeinheit 50 sind fluidtechnisch miteinander verbunden. Die Ventileinheit 14 ist in einem Bereich des Hauptausgangs 64 angeordnet.

Eine Brüheinheit 36 trennt die Ventileinheit 14 und die weitere Ventileinheit 28 voneinander. Bezüglich der Hauptströmungsrichtung 54 ist die Brüheinheit 36 zwischen der Ventileinheit 14 und der weiteren Ventileinheit 28 angeordnet. Die Getränkemaschinenvorrichtung 10 weist die Brüheinheit 36 auf. Die Brüheinheit 36 ist innerhalb des Hauptströmungskanals 20 angeordnet.

Der Fluidkanal 12 weist eine Druckleitung 34 auf. Die Druckleitung 34 zweigt von dem Hauptströmungskanal 20 ab. Bezüglich der Hauptströmungsrichtung 54 zweigt die Druckleitung 34 zwischen der weiteren Ventileinheit 28 und der Brüheinheit 36 von dem Hauptströmungskanal 20 ab. Die Druckleitung 34 führt von dem Hauptströmungskanal 20 zu der Drucksteuerfläche 18. Die Druckleitung 34 überbrückt die Brüheinheit 36. In dem Betriebszustand ist die Druckleitung 34 mit Fluid gefüllt. Das in der Druckleitung 34 befindliche Fluid ist zu einem Großteil ein Gas.

Die Ventileinheit 14 weist eine Einstelleinheit 38 auf. Mittels der Einstelleinheit 38 ist ein Öffnungswiderstand des Ventilelements 16 einstellbar. Die Einstelleinheit 38 ist als eine Gewindeeinheit ausgebildet. Im vorliegenden Ausführungsbeispiel ist die Einstelleinheit 38 manuell betätigbar. Die Einstelleinheit 38 ist durch eine Steuereinheit 40 betätigbar (vgl. Figur 1).

Die Getränkemaschinenvorrichtung 10 weist die Steuereinheit 40 auf. In einem Betriebszustand, in welchem die Steuereinheit 40 ein automatisches Getränkezubereitungsprogramm ausführt, verändert die Steuereinheit 40 den Öffnungswiderstand des Ventilelements 16 durch Betätigung der Einstelleinheit 38.

Im vorliegenden Ausführungsbeispiel verändert die Steuereinheit 40 in dem Betriebszustand einen Öffnungswiderstand des weiteren Ventilelements 30 durch Betätigung einer weiteren Einstelleinheit 66.

Die weitere Ventileinheit 28 weist die weitere Einstelleinheit 66 auf. Mittels der weiteren Einstelleinheit 66 ist der Öffnungswiderstand des weiteren Ventilelements 30 einstellbar. Die weitere Einstelleinheit 66 ist als eine Gewindeeinheit ausgebildet. Im vorliegenden Ausführungsbeispiel ist die weitere Einstelleinheit 66 manuell betätigbar.

Die Ventileinheit 14 weist eine Druckausgleichsausnehmung 72 auf. Die Druckausgleichsausnehmung 72 ist in einem Bereich der Einstelleinheit 38 angeordnet. Die weitere Ventileinheit 28 weist eine weitere Druckausgleichsausnehmung 74 auf. Die weitere Druckausgleichsausnehmung 74 ist in einem Bereich der weiteren Einstelleinheit 66 angeordnet.

In dem Betriebszustand führt die Steuereinheit 40 ein Verfahren zum Betrieb der Getränkemaschinenvorrichtung 10 durch. Im vorliegenden Ausführungsbeispiel verwendet die Steuerreinheit 40 bei dem Verfahren die insbesondere eingangs beschriebene Getränkemaschinenvorrichtung 10. Alternativ könnte die Steuereinheit 40 das Verfahren mittels zumindest einer Sensoreinheit durchführen, welche insbesondere zumindest einen Fluiddruck, insbesondere zumindest einen Maximalfluiddruck und/oder zumindest einen Minimalfluiddruck, in dem Hauptströmungskanal detektieren könnte und vorteilhaft zu einer Steuerung und/oder einer Regelung einer Getränkepumpe, insbesondere einer Schwingankerpumpe, der Ventileinheit und/oder der weiteren Ventileinheit nutzen könnte.

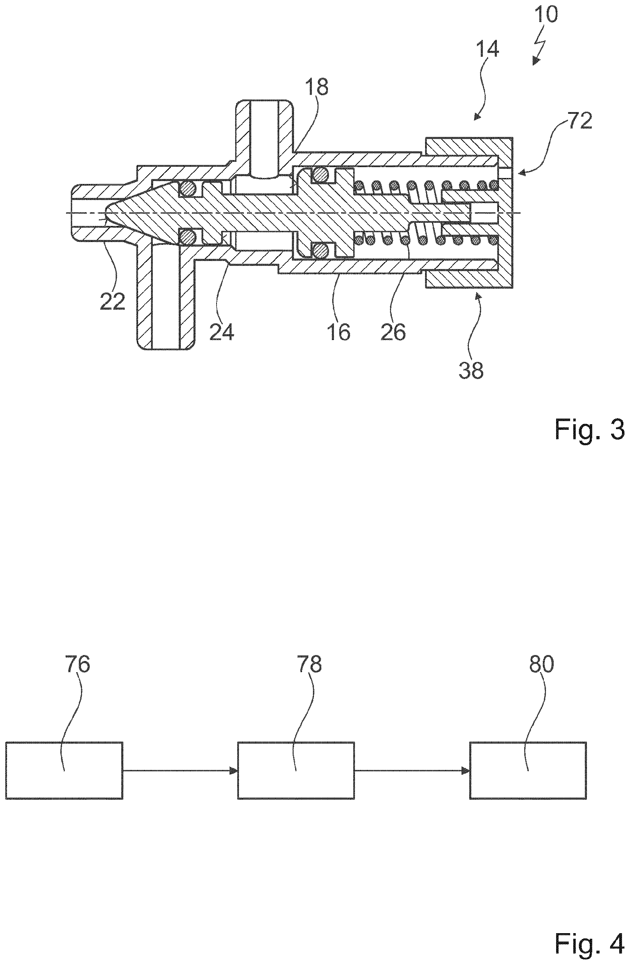

Das Verfahren umfasst einen Startschritt 76. In dem Startschritt 76 wird durch einen Bediener das Verfahren gestartet, und zwar insbesondere mittels der Bedienerschnittstelle 44 (vgl. Figur 4). Der Bediener betätigt in dem Startschritt 76 die Bedienerschnittstelle 44. In Abhängigkeit von einer Betätigung der Bedienerschnittstelle 44 wird das Verfahren gestartet und ein Brühschritt 78 des Verfahrens wird eingeleitet.

In dem Betriebszustand wird in dem Brühschritt 78 ein Fluiddruck innerhalb des Hauptströmungskanals 20 auf einen im Wesentlichen konstanten Wert eingeregelt.

In einem Fall, in welchem ein auf die Drucksteuerfläche 18 wirkender Fluiddruck einen Minimalfluiddruck unterschreitet, wird der Hauptströmungskanal 20 geschlossen. Die Ventileinheit 14 schließt in dem Fall, in welchem ein auf die Drucksteuerfläche 18 wirkender Fluiddruck einen Minimalfluiddruck unterschreitet, den Hauptströmungskanal 20 durch Bewegung des Ventilelements 16.

In einem Fall, in welchem ein auf die Drucksteuerfläche 18 wirkender Fluiddruck einen Maximalfluiddruck übersteigt, wird der Hauptströmungskanal 20 geöffnet. Die Ventileinheit 14 öffnet in dem Fall, in welchem ein auf die Drucksteuerfläche 18 wirkender Fluiddruck einen Maximalfluiddruck übersteigt, den Hauptströmungskanal 20 durch Bewegung des Ventilelements 16.

In einem Fall, in welchem ein auf die weitere Drucksteuerfläche 32 wirkender Fluiddruck einen weiteren Maximalfluiddruck übersteigt, wird der Hauptströmungskanal 20 geschlossen. Die weitere Ventileinheit 28 schließt in dem Fall, in welchem ein auf die weitere Drucksteuerfläche 32 wirkender Fluiddruck einen weiteren Maximalfluiddruck übersteigt, den Hauptströmungskanal 20 durch Bewegung des weiteren Ventilelements 30.

In einem Fall, in welchem ein auf die weitere Drucksteuerfläche 32 wirkender Fluiddruck einen weiteren Minimalfluiddruck unterschreitet, wird der Hauptströmungskanal 20 geöffnet. Die weitere Ventileinheit 28 öffnet in dem Fall, in welchem ein auf die weitere Drucksteuerfläche 32 wirkender Fluiddruck einen Minimalfluiddruck unterschreitet, den Hauptströmungskanal 20 durch Bewegung des weiteren Ventilelements 30.

Die Fälle können insbesondere in Kombination oder einzeln auftreten.

Das Verfahren umfasst einen Beendigungsschritt 80. In dem Betriebszustand wird in dem Beendigungsschritt 80 das Verfahren beendet. Im vorliegenden Ausführungsbeispiel wird das Verfahren in dem Beendigungsschritt 80 nach Erreichen eines vorgegeben Betriebswerts beendet. Der vorgegebene Betriebswert kann eine vorgegebene Zeit und/oder ein vorgegebenes Fluidvolumen sein. Alternativ oder zusätzlich kann das Verfahren in dem Beendigungsschritt 80 durch einen Bediener beendet werden, und zwar insbesondere mittels der Bedienerschnittstelle 44. Der Bediener kann zum Beendigen des Verfahrens in dem Beendigungsschritt 80 die Bedienerschnittstelle 44 betätigen.

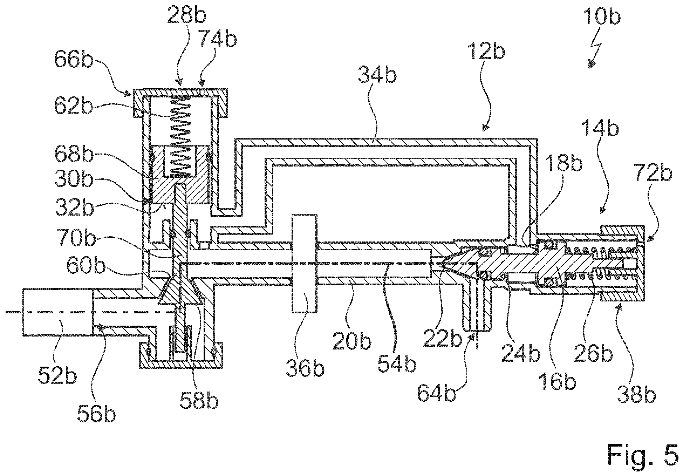

In Figur 5 ist ein weiteres Ausführungsbeispiel der Erfindung gezeigt. Die nachfolgende Beschreibung beschränkt sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Figuren 1 bis 4 verwiesen werden kann. Zur Unterscheidung der Ausführungsbeispiele ist den Bezugszeichen des Ausführungsbeispiels der Figuren 1 bis 4 in dem Ausführungsbeispiel der Figur 5 der Buchstabe b hinzugefügt. Bezüglich gleich bezeichneter Bauteile, insbesondere in Bezug auf Bauteile mit gleichen Bezugszeichen, kann grundsätzlich auch auf die Zeichnung und/oder die Beschreibung des Ausführungsbeispiels der Figuren 1 bis 4 verwiesen werden.

Figur 5 zeigt einen Fluidkanal 12b, eine Brüheinheit 36b, eine Ventileinheit 14b und eine weitere Ventileinheit 28b einer alternativen Getränkemaschinenvorrichtung 10b. Der Fluidkanal 12b weist eine Druckleitung 34b auf. Die Druckleitung 34b führt zu einer Drucksteuerfläche 18b eines Ventilelements 16b der Ventileinheit 14b. Die Drucksteuerfläche 18b des Ventilelements 16b ist mittels der Druckleitung 34b mit einer weiteren Drucksteuerfläche 32b eines weiteren Ventilelements 30b der weiteren Ventileinheit 28b verbunden.

Die Druckleitung 34b zweigt von einem weiteren Fluidraum ab, welcher der weiteren Drucksteuerfläche 32b vorgeordnet ist. Die Druckleitung 34b führt zu einem Fluidraum, welcher der Drucksteuerfläche 18b vorgeordnet ist. Die Druckleitung 34b überbrückt die Brüheinheit 36b. Die Druckleitung 34b ist parallel zu einem Hauptströmungskanal 20b des Fluidkanals 12b ausgerichtet.

### Bezugszeichen

- 10: Getränkemaschinenvorrichtung
- 12: Fluidkanal
- 14: Ventileinheit
- 16: Ventilelement
- 18: Drucksteuerfläche
- 20: Hauptströmungskanal
- 22: Zweite Drucksteuerfläche
- 24: Dritte Drucksteuerfläche
- 26: Federelement
- 28: Weitere Ventileinheit
- 30: Weiteres Ventilelement
- 32: Weitere Drucksteuerfläche
- 34: Druckleitung
- 36: Brüheinheit
- 38: Einstelleinheit
- 40: Steuereinheit
- 42: Getränkemaschine
- 44: Bedienerschnittstelle
- 46: Abstellrost
- 48: Gefäßaufnahme
- 50: Getränkeausgabeeinheit
- 52: Getränkepumpe
- 54: Hauptströmungsrichtung
- 56: Haupteingang
- 58: Weitere zweite Drucksteuerfläche
- 60: Weitere dritte Drucksteuerfläche
- 62: Weiteres Federelement
- 64: Hauptausgang
- 66: Weitere Einstelleinheit
- 68: Weiterer erster Ventilelementteilbereich
- 70: Weiterer zweiter Ventilelementteilbereich
- 72: Druckausgleichsausnehmung
- 74: Weitere Druckausgleichsausnehmung
- 76: Startschritt
- 78: Brühschritt
- 80: Beendigungsschritt

## Patentansprüche

1. Getränkemaschinenvorrichtung, insbesondere Kaffeemaschinenvorrichtung, mit zumindest einem Fluidkanal (12; 12b), welcher zumindest einen Hauptströmungskanal (20; 20b) aufweist, und mit zumindest einer Ventileinheit (14; 14b), welche zumindest ein Ventilelement (16; 16b) mit zumindest einer Drucksteuerfläche (18; 18b) aufweist und welche dazu vorgesehen ist, zumindest in Abhängigkeit von einem auf die Drucksteuerfläche (18; 18b) wirkenden Fluiddruck den Hauptströmungskanal (20; 20b) durch Bewegung des Ventilelements (16; 16b) zu öffnen und/oder zu schließen, wobei die Drucksteuerfläche (18; 18b) außerhalb des Hauptströmungskanals (20; 20b) angeordnet ist, wobei der Fluidkanal (12; 12b) zumindest eine Druckleitung (34; 34b) aufweist, welche von dem Hauptströmungskanal (20; 20b) abzweigt und zu der Drucksteuerfläche (18) führt, wobei die Getränkemaschinenvorrichtung eine Brüheinheit (36; 36b) aufweist, welche innerhalb des Hauptströmungskanals (20; 20b) angeordnet ist, wobei die Druckleitung (34; 34b) die Brüheinheit (36; 36b) überbrückt,
**dadurch gekennzeichnet, dass**
die Ventileinheit (14; 14b) in zumindest einem Betriebszustand dazu eingerichtet ist, einen Fluiddruck innerhalb des Hauptströmungskanals (20; 20b) auf einen wenigstens im Wesentlichen konstanten Wert einzuregeln.

2. Getränkemaschinenvorrichtung nach Anspruch 1, **dadurch gekennzeichnet, dass** das Ventilelement (16; 16b) zumindest eine zweite Drucksteuerfläche (22; 22b) aufweist, welche in wenigstens einem Betriebszustand innerhalb des Hauptströmungskanals (20; 20b) angeordnet ist.

3. Getränkemaschinenvorrichtung nach Anspruch 2, **dadurch gekennzeichnet, dass** die Drucksteuerfläche (18; 18b) und die zweite Drucksteuerfläche (22; 22b) fluidtechnisch gleichgerichtet sind.

4. Getränkemaschinenvorrichtung nach einem der vorhergehenden Ansprüche, **dadurch gekennzeichnet, dass** das Ventilelement (16; 16b) zumindest eine dritte Drucksteuerfläche (24; 24b) aufweist, welche außerhalb des Hauptströmungskanals (20; 20b) angeordnet und der Drucksteuerfläche (18) fluidtechnisch entgegengerichtet ist.

5. Getränkemaschinenvorrichtung nach einem der vorhergehenden Ansprüche, **dadurch gekennzeichnet, dass** die Ventileinheit (14; 14b) zumindest ein Federelement (26; 26b) aufweist, welches in wenigstens einem Betriebszustand einer durch ein Fluid an der Drucksteuerfläche (18; 18b) erzeugten Kraft wenigstens teilweise entgegen wirkt.

6. Getränkemaschinenvorrichtung nach einem der vorhergehenden Ansprüche, **dadurch gekennzeichnet, dass** die Ventileinheit (14; 14b) als ein Minimaldruckregler ausgebildet ist.

7. Getränkemaschinenvorrichtung nach einem der vorhergehenden Ansprüche, **gekennzeichnet durch** zumindest eine weitere Ventileinheit (28; 28b), welche zumindest ein weiteres Ventilelement (30; 30b) mit zumindest einer weiteren Drucksteuerfläche (32; 32b) aufweist, die außerhalb des Hauptströmungskanals (20; 20b) angeordnet ist.

8. Getränkemaschinenvorrichtung nach Anspruch 7, **dadurch gekennzeichnet, dass** die weitere Ventileinheit (28; 28b) als ein Maximaldruckregler ausgebildet ist.

9. Getränkemaschinenvorrichtung zumindest nach Anspruch 1 und 7, **dadurch gekennzeichnet, dass** die Brüheinheit (36; 36b) die Ventileinheit (14; 14b) und die weitere Ventileinheit (28; 28b) voneinander trennt.

10. Getränkemaschinenvorrichtung nach einem der vorhergehenden Ansprüche, **dadurch gekennzeichnet, dass** die Ventileinheit (14) zumindest eine Einstelleinheit (38; 38b) aufweist, mittels welcher ein Öffnungswiderstand des Ventilelements (16; 16b) einstellbar ist.

11. Getränkemaschinenvorrichtung nach Anspruch 10, **gekennzeichnet durch** zumindest eine Steuereinheit (40; 40b), welche dazu vorgesehen ist, in wenigstens einem Betriebszustand den Öffnungswiderstand des Ventilelements (16; 16b) durch Betätigung der Einstelleinheit (38; 38b) zu verändern.

12. Getränkemaschine, insbesondere Kaffeemaschine, mit zumindest einer Getränkemaschinenvorrichtung (10; 10b), insbesondere mit zumindest einer Kaffeemaschinenvorrichtung, nach einem der vorhergehenden Ansprüche.

13. Verfahren zum Betrieb einer Getränkemaschinenvorrichtung (10; 10b) mit zumindest einem Fluidkanal (12; 12b), welcher zumindest einen Hauptströmungskanal (20; 20b) aufweist, und mit zumindest einer Ventileinheit (14; 14b), welche zumindest ein Ventilelement (16; 16b) mit zumindest einer Drucksteuerfläche (18; 18b) aufweist und welche dazu vorgesehen ist, zumindest in Abhängigkeit von einem auf die Drucksteuerfläche (18; 18b) wirkenden Fluiddruck den Hauptströmungskanal (20; 20b) durch Bewegung des Ventilelements (16; 16b) zu öffnen und/oder zu schließen, wobei die Drucksteuerfläche (18; 18b) außerhalb des Hauptströmungskanals (20; 20b) angeordnet ist, wobei der Fluidkanal (12; 12b) zumindest eine Druckleitung (34; 34b) aufweist, welche von dem Hauptströmungskanal (20; 20b) abzweigt und zu der Drucksteuerfläche (18; 18b) führt, wobei die Getränkemaschinenvorrichtung eine Brüheinheit (36; 36b) aufweist, welche innerhalb des Hauptströmungskanals (20; 20b) angeordnet ist, wobei die Druckleitung (34; 34b) die Brüheinheit (36; 36b) überbrückt, **dadurch gekennzeichnet, dass** in wenigstens einem Betriebszustand ein Fluiddruck innerhalb zumindest eines Hauptströmungskanals (20; 20b) mittels der Ventileinheit (14; 14b) und/oder mittels einer weiteren Ventileinheit (14; 14b) auf einen wenigstens im Wesentlichen konstanten Wert eingeregelt wird.

## Claims

1. Beverage machine device, in particular coffee machine device, with at least one fluid channel (12; 12b) comprising at least one main flux channel (20; 20b) and with at least one valve unit (14; 14b) which comprises at least one valve element (16; 16b), having at least one pressure control surface (18; 18b), and which is configured to open and/or close the main flux channel (20; 20b), at least depending on a fluid pressure acting on the pressure control surface (18; 18b), by moving the valve element (16; 16b),
the pressure control surface (18; 18b) being arranged outside the main flux channel (20; 20b),
the fluid channel (12; 12b) comprising at least one pressure duct (34; 34b) branching off the main flux channel (20; 20b) and leading to the pressure control surface (18),
the beverage machine device comprising a brewing unit (36; 36b) that is arranged inside the main flux channel (20; 20b),
the pressure duct (34; 34b) bridging the brewing unit (36; 36b),
**characterised in that** the valve unit (14; 14b) is in at least one operating state configured to regulate a fluid pressure within the main flux channel (20; 20b) to a value that is at least substantially constant.

2. Beverage machine device according to claim 1,
**characterised in that** the valve element (16; 16b) comprises at least one second pressure control surface (22; 22b), which is in at least one operating state arranged within the main flux channel (20; 20b).

3. Beverage machine device according to claim 2,
**characterised in that** the pressure control surface (18; 18b) and the second pressure control surface (22; 22b) are identically oriented in terms of fluid mechanics.

4. Beverage machine device according to one of the preceding claims,
**characterised in that** the valve element (16; 16b) comprises at least one third pressure control surface (24; 24b), which is arranged outside the main flux channel (20; 20b) and is oriented counter to the pressure control surface (18).

5. Beverage machine device according to one of the preceding claims,
**characterised in that** the valve unit (14; 14b) comprises at least one spring element (26; 26b) which, in at least one operating state, acts at least partially counter to a force generated on the pressure control surface (18; 18b) by a fluid.

6. Beverage machine device according to one of the preceding claims,
**characterised in that** the valve unit (14; 14b) is embodied as a minimum pressure regulator.

7. Beverage machine device according to one of the preceding claims,
**characterised by** at least one further valve unit (28; 28b) comprising at least one further valve element (30; 30b) with at least one further pressure control surface (32; 32b) that is arranged outside the main flux channel (20; 20b).

8. Beverage machine device according to claim 7,
**characterised in that** the further valve unit (28; 28b) is embodied as a maximum pressure regulator.

9. Beverage machine device at least according to claims 1 and 7,
**characterised in that** the brewing unit (36; 36b) separates the valve unit (14; 14b) and the further valve unit (28; 28b) from one another.

10. Beverage machine device according to one of the preceding claims,
**characterised in that** the valve unit (14) comprises at least one adjustment unit (38; 38b), by means of which an opening resistance of the valve element (16; 16b) is adjustable.

11. Beverage machine device according to claim 10,
**characterised by** at least one control unit (40; 40b), which is configured, in at least one operating state, to modify the opening resistance of the valve element (16; 16b) by actuating the adjustment unit (38; 38b).

12. Beverage machine, in particular coffee machine, with at least one beverage machine device (10; 10b), in particular with at least one coffee machine device, according to one of the preceding claims.

13. Method for operating a beverage machine device (10; 10b)
with at least one fluid channel (12; 12b), comprising at least one main flux channel (20; 20b), and with at least one valve unit (14; 14b) which comprises at least one valve element (16; 16b), having at least one pressure control surface (18; 18b), and which is configured to open and/or close the main flux channel (20; 20b), at least depending on a fluid pressure acting on the pressure control surface (18; 18b), by moving the valve element (16; 16b),
the pressure control surface (18; 18b) being arranged outside the main flux channel (20; 20b),
the fluid channel (12; 12b) comprising at least one pressure duct (34; 34b) branching off the main flux channel (20; 20b and leading to the pressure control surface (18; 18b),
the beverage machine device comprising a brewing unit (36; 36b) that is arranged inside the main flux channel (20; 20b),
the pressure duct (34; 34b) bridging the brewing unit (36; 36b),
**characterised in that,** in at least one operating state, a fluid pressure within at least one main flux channel (20; 20b) is regulated to an at least substantially constant value by means of the valve unit (14; 14b) and/or by means at least one further valve unit (14; 14b).

## Revendications

1. Dispositif de machine à boissons, en particulier dispositif de machine à café, avec au moins un canal de fluide (12 ; 12b) comprenant au moins un canal de flux principal (20 ; 20b), et avec au moins une unité de vanne (14 ; 14b) qui comporte au moins un élément de vanne (16 ; 16b), comprenant au moins une surface à commande de pression (18 ; 18b), et qui est configurée à ouvrir et/ou fermer le canal de flux principal (20 ; 20b), au moins en dépendance à une pression de fluide agissant sur la surface à commande de pression (18 ; 18b), en mouvant l'élément de vanne (16 ; 16b),
la surface à commande de pression (18 ; 18b) étant agencée à l'extérieur du canal de flux principal (20 ; 20b),
le canal de fluide (12 ; 12b) comportant au moins un conduit de pression (34 ; 34b) bifurquant du canal de flux principal (20 ; 20b) et menant à la surface à commande de pression (18),
le dispositif de machine à boissons comprenant une unité infuseur (36 ; 36b) qui est agencée à l'intérieur du canal de flux principal (20 ; 20b),
le conduit de pression (34 ; 34b) traversant au-dessus de l'unité infuseur (36 ; 36b),
**caractérisé en ce qu**', en au moins un état opératif, l'unité de vanne (14 ; 14b) est configurée pour réguler une pression de fluide à l'intérieur du canal de flux principal (20 ; 20b) à une valeur au moins sensiblement constante.

2. Dispositif de machine à boissons selon la revendication 1,
**caractérisé en ce que** l'élément de vanne (16 ; 16b) comporte au moins une deuxième surface à commande de pression (22 ; 22b) qui est disposée, en au moins un état opératif, à l'intérieur du canal de flux principal (20 ; 20b).

3. Dispositif de machine à boissons selon la revendication 2,
**caractérisé en ce que** la surface à commande de pression (18 ; 18b) et la deuxième surface à commande de pression (22 ; 22b) sont orientées de façon identique en termes de la mécanique des fluides.

4. Dispositif de machine à boissons selon l'une quelconque des revendications précédentes,
**caractérisé en ce que** l'élément de vanne (16 ; 16b) comporte au moins une troisième surface à commande de pression (24 ; 24b) qui est disposée à l'extérieur du canal de flux principal (20 ; 20b) et est orientée, en termes de la mécanique de fluides, à l'encontre de la surface à commande de pression (18).

5. Dispositif de machine à boissons selon l'une quelconque des revendications précédentes,
**caractérisé en ce que** l'unité de vanne (14 ; 14b) comporte au moins un élément de ressort (26 ; 26b) agissant, en au moins un état opératif, au moins partiellement à l'encontre d'une force générée à la surface à commande de pression (18 ; 18b) par un fluide.

6. Dispositif de machine à boissons selon l'une quelconque des revendications précédentes,
**caractérisé en ce que** l'unité de vanne (14 ; 14b) est réalisée comme régulateur de pression minimale.

7. Dispositif de machine à boissons selon l'une quelconque des revendications précédentes,
**caractérisé par** au moins une autre unité de vanne (28 ; 28b) comportant au moins un autre élément de vanne (30 ; 30b) avec au moins une autre surface à commande de pression (32 ; 32b) disposée à l'extérieur du canal de flux principal (20 ; 20b).

8. Dispositif de machine à boissons selon la revendication 7,
**caractérisé en ce que** l'autre unité de vanne (28 ; 28b) est réalisée comme régulateur de pression maximale.

9. Dispositif de machine à boissons au moins selon les revendications 1 et 7,
**caractérisé en ce que** l'unité infuseur (36 ; 36b) sépare l'unité de vanne (14 ; 14b) et l'autre unité de vanne (28 ; 28b) l'une de l'autre.

10. Dispositif de machine à boissons selon l'une quelconque des revendications précédentes,
**caractérisé en ce que** l'unité de vanne (14) comporte au moins une unité d'ajustement (38 ; 38b), par le biais de laquelle une résistance à l'ouverture de l'élément de vanne (16 ; 16b) peut être ajustée.

11. Dispositif de machine à boissons selon la revendication 10,
**caractérisé par** au moins une unité de commande (40 ; 40b) qui est configurée, en au moins un état opératif, pour changer la résistance à l'ouverture de l'élément de vanne (16 ; 16b) en actionnant l'unité d'ajustement (38 ; 38b).

12. Machine à boissons, en particulier machine à café, avec au moins un dispositif de machine à boissons (10 ; 10b), en particulier avec au moins un dispositif de machine à café, selon l'une quelconque des revendications précédentes.

13. Procédé en fonctionnement d'un dispositif de machine à boissons (10 ; 10b) avec au moins un canal de fluide (12 ; 12b) comprenant au moins un canal de flux principal (20 ; 20b), et avec au moins une unité de vanne (14 ; 14b) qui comporte au moins un élément de vanne (16 ; 16b) avec au moins une surface à commande de pression (18 ; 18b), et qui est configurée à ouvrir et/ou fermer le canal de flux principal (20 ; 20b) au moins en dépendance à une pression de fluide agissant sur la surface à commande de pression (18 ; 18b), en mouvant l'élément de vanne (16 ; 16b),
la surface à commande de pression (18 ; 18b) étant agencée à l'extérieur du canal de flux principal (20 ; 20b),
le canal de fluide (12 ; 12b) comportant au moins un conduit de pression (34 ; 34b) bifurquant du canal du flux principal (20 ; 20b) et menant à la surface à commande de pression (18 ; 18b),
le dispositif de machine à boissons comprenant une unité infuseur (36 ; 36b) agencée à l'intérieur du canal de flux principal (20 ; 20b),
le conduit de pression (34 ; 34b) traversant au-dessus de l'unité infuseur (36 ; 36b),
**caractérisé en ce qu**', en au moins un état opératif, une pression de fluide à l'intérieur d'au moins un canal de flux principal (20 ; 20b) est régulée par l'unité de vanne (14 ; 14b) et/ou par au moins une autre unité de vanne (14 ; 14b) a une valeur au moins sensiblement constante.
